# EUROPÄISCHE PATENTSCHRIFT

(11) **EP 2 577 086 B1**
(45) Veröffentlichungstag und Bekanntmachung des Hinweises auf die Patenterteilung: **14.03.2018**
(21) Anmeldenummer: 11729265.6
(22) Anmeldetag: 23.05.2011
(51) Int. Cl.: F16D 65/08

(54) **BREMSBACKE EINER TROMMELBREMSE, BREMSBACKENSATZ UND TROMMELBREMSE**
BRAKE SHOE OF A DRUM BRAKE, BRAKE SHOE SET, AND DRUM BRAKE
MÂCHOIRE D'UN FREIN À TAMBOUR, JEU DE MÂCHOIRES DE FREIN ET FREIN À TAMBOUR

(30) Priorität: 25.05.2010 DE 102010021393
(43) Veröffentlichungstag der Anmeldung: 10.04.2013
(73) Patentinhaber: KNORR-BREMSE Systeme für Nutzfahrzeuge GmbH, 80809 München (DE)
(72) Erfinder: PAPP, Viktor, H-6782 Mórahalom (HU)
(74) Vertreter: Mattusch, Gundula
(86) Internationale Anmeldenummer: PCT/EP2011/058354
(87) Internationale Veröffentlichungsnummer: WO 2011/147771

(56) Entgegenhaltungen:
- EP-A2- 0 216 608
- US-A- 1 629 272
- US-A- 1 982 360

## Beschreibung

Die vorliegende Erfindung betrifft eine Bremsbacke einer Trommelbremse gemäß dem Oberbegriff des Anspruchs 1, eine Bremsbacke einer Trommelbremse gemäß dem Oberbegriff des Anspruchs 5, einen Bremsbackensatz gemäß dem Oberbegriff des Anspruchs 13 sowie eine Trommelbremse gemäß dem Oberbegriff des Anspruchs 15.

Zur Betätigung einer bekannten Trommelbremse sind hohe Bremskräfte erforderlich, mit denen die Bremsbacken gegen die innere Mantelfläche einer Bremstrommel gedrückt werden. Zur Verringerung dieser notwendigen Bremskraft ist es bekannt, mehrteilige Bremsbacken zu verwenden, bei denen die Bremsbacken schwenkbar an einem Bremsbackenträger befestigt sind, der als Stützzapfen an einer gegenüber der Bremstrommel verdreh sicheren Trägerscheibe gehalten ist.

Es ist auch bekannt, mehr als zwei Bremsbacken in einer Trommelbremse anzuordnen, beispielsweise aus der US1982360 oder der DE 1 011 677, bei der drei Bremsbacken an einen sechseckigen elastischen Körper aufgehängt sind und über jeweilige Bolzen an den Eckpunkten des elastischen Körpers angelenkt sind und durch Druckfedern an die Reibfläche der Bremstrommel angepresst werden.

Aufgabe der vorliegenden Erfindung ist es, eine Bremsbacke bzw. einen Bremsbackensatz bzw. eine Trommelbremse der jeweils gattungsgemäßen Art so weiter zu entwickeln, dass auf der Reibfläche der Bremstrommel während der Betätigung eine möglichst gleichmäßige Druckverteilung erreicht wird.

Diese Aufgabe wird durch eine Bremsbacke mit den Merkmalen des Anspruchs 1, durch eine Bremsbacke mit den Merkmalen des Anspruchs 5, einen Bremsbackensatz mit den Merkmalen des Anspruchs 13 sowie durch eine Trommelbremse mit den Merkmalen des Anspruchs 15 gelöst.

Erfindungsgemäß weist die Bremsbacke gemäß Anspruch 1 einen Verlängerungsabschnitt eines Steges auf, der sich von der Bremsbelagträgersohle weg erstreckt und an dessen entferntem Ende eine Anlenkung ausgebildet ist und das an der der Bremstrommel zugewandten Seite des Verlängerungsabschnitts eine Führung zur Betätigung einer benachbarten Bremsbacke vorgesehen ist. Eine derart ausgebildete Bremsbacke kann von einer Betätigungseinrichtung angelenkt werden und gleichzeitig eine mit dieser Bremsbacke in Wirkverbindung stehende benachbarte Bremsbacke über die Führung betätigen. Somit ist zur Betätigung einer Trommelbremse mit einer derartig ausgebildeten Bremsbacke ermöglicht, eine zweite mit dieser Bremsbacke in Wirkverbindung stehende Bremsbacke gleichzeitig zu betätigen.

Dementsprechend ist die Bremsbacke gemäß Anspruch 5 derart ausgebildet, dass an dem der Anlenkung gegenüber liegenden freien Ende des Steges ein Betätigungselement vorgesehen ist, dass in Wirkverbindung mit einer Führung der benachbarten Bremsbacke bringbar ist.

Bringt man zwei solchen Bremsbackenansätze in einer Trommelbremse ein, so kann mit einem relativ niedrigen Druck ein relativ hohes Gesamtdruckniveau zur Betätigung der Trommelbremse erreicht werden. Durch die Anordnung der Bremsbacken in der Trommelbremse wird außerdem nahezu die gesamte Reibfläche der Bremstrommel ausgenutzt. Durch die optimierten Bewegungseigenschaften der einzelnen Bremsbacken wird eine optimale gleichmäßige Druckverteilung realisiert.

Vorteilhafte Ausführungsvarianten der Erfindung sind Gegenstand der Unteransprüche. Erfindungsgemäß ist das Betätigungselement an den jeweiligen Bremsbacken als Rollelement mit einer parallel zur Symmetrieachse der Bremstrommel ausgerichteten Drehachse ausgebildet. Ein solches Rollelement erlaubt eine einfach und kostengünstig zu realisierende Bewegungsführung der Bremsbacke.

Gemäß einer weiteren Ausführungsvariante beträgt das Verhältnis A/R zwischen 0,6 und 0,9, wobei R der Radius der Reibfläche des Bremsbelages ist und A der Abstand zwischen der Bremstrommelachse und der Anlenkung der Bremsbacke am Bremsbackenträger. Dieses Verhältnis garantiert eine optimale Kraft- und Reibungsverteilung in der Trommelbremse. Durch die optimierte Kraft- und Reibungsverteilung sind auch die Höchsttemperatureigenschaften sowie die Belastungsdauer gegenüber aus dem Stand der Technik bekannten Trommelbremsen verbessert. Die Betriebsdauer einer solchen erfindungsgemäßen Trommelbremse erhöht sich auch durch die insgesamt größere genutzte Gesamtreibungsfläche.

Gemäß einer weiteren vorteilhaften Ausführungsvariante ist das Verhältnis eines von dem Bremsbelag überstrichenen Winkels zu einem Winkel, der sich von dem den freien Ende der Bremsbacke abgewandten Ende des Bremsbelags bis zur Anlenkung erstreckt, zwischen 2/3 und 5, insbesondere zwischen 2/3 und 5/3.

Diese Winkelverhältnisse haben sich als besonders vorteilhaft für das Zusammenwirken der Bremsbacken und deren Anlenkung herausgestellt Nachfolgend werden Ausführungsbeispiele der Erfindung anhand der beigefügten Zeichnungen näher beschrieben. Es zeigen:
- Figur 1: eine perspektivische Ansicht einer Ausführungsvariante einer erfindungsgemäßen Trommelbremse,
- Figur 2: eine Querschnittsansicht durch die Trommelbremse mit innen liegenden Bremsbacken,
- Figur 3: die Querschnittsansicht der Trommelbremse aus Figur 2 ohne Darstellung der Aufhängung,
- Figur 4a: eine Draufsicht auf eine Ausführungsvariante einer erfindungsgemäßen ersten Bremsbacke,
- Figur 4b: eine Draufsicht auf eine weitere Ausführungsvariante einer erfindungsgemäßen ersten Bremsbacke,
- Figur 5: eine Draufsicht auf eine Ausführungsvariante einer erfindungsgemäßen zweiten Bremsbacke,
- Figur 6a: eine Ausführungsvariante eines erfindungsgemäßen Bremsbackensatzes in einer Draufsicht,
- Figur 6b: eine weitere Ausführungsvariante eines erfindungsgemäßen Bremsbackensatzes in einer Draufsicht.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Bremsbacke, der Trommelbremse und anderer Teile. Diese Begriffe sind nicht einschränkend zu verstehen, das heißt, durch verschiedene Arbeitsstellungen oder die spiegelsymmetrische Auslegung oder dergleichen können sich diese Bezüge ändern.

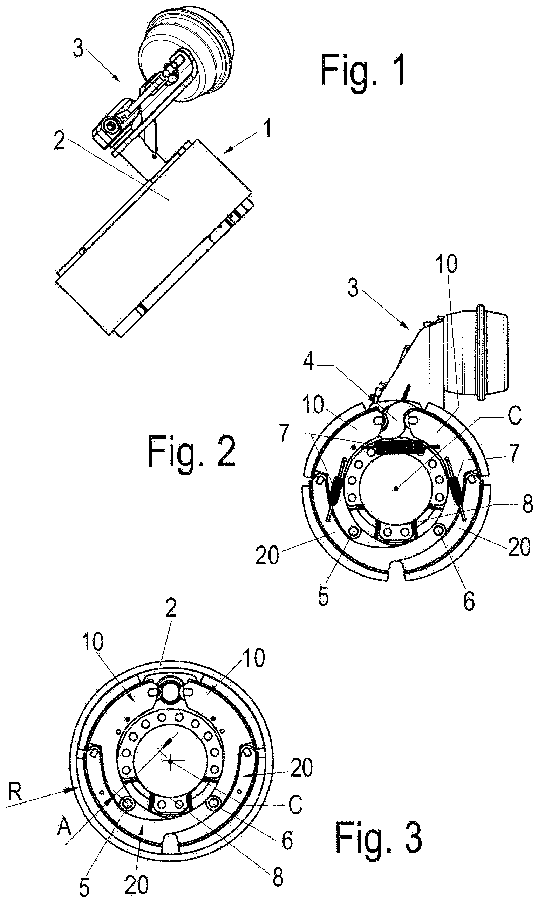

In der Figur ist mit dem Bezugszeichen 1 insgesamt eine Ausführungsvariante einer erfindungsgemäßen Trommelbremse bezeichnet. Sie weist eine Bremstrommel 2 mit innenliegenden Bremsbacken 10, 20 sowie eine Betätigungseinrichtung 4, die mit einem an einem Träger 3 angeordneten Antrieb verbunden ist. Wie in den Figuren 2 und 3 gezeigt, sind in der Bremstrommel 2 mehr als zwei Bremsbacken 10, 20 innenliegend in der Bremstrommel 2 angeordnet, im hier gezeigten Ausführungsbeispiel insgesamt vier Bremsbacken 10, 20. Jede der Bremsbacken 10, 20 ist an einem Bremsbackenträger 5, 6 schwenkbar gelagert, wobei der Bremsbackenträger 5, 6 ortsfest an einer Trägerscheibe 8 befestigt ist.

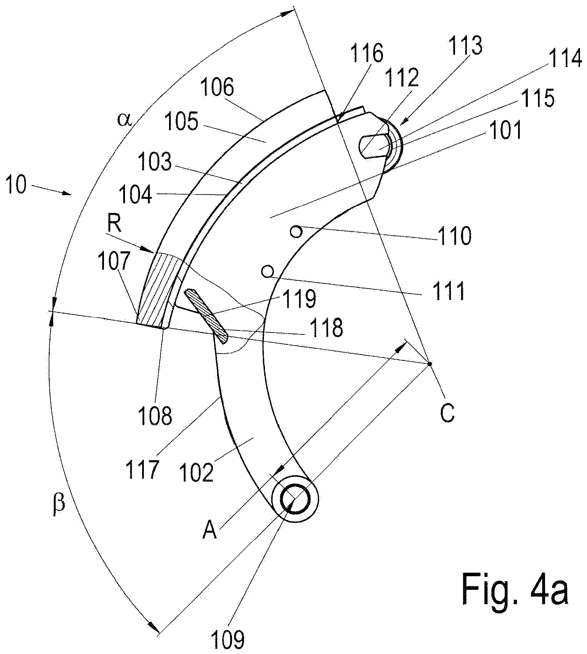

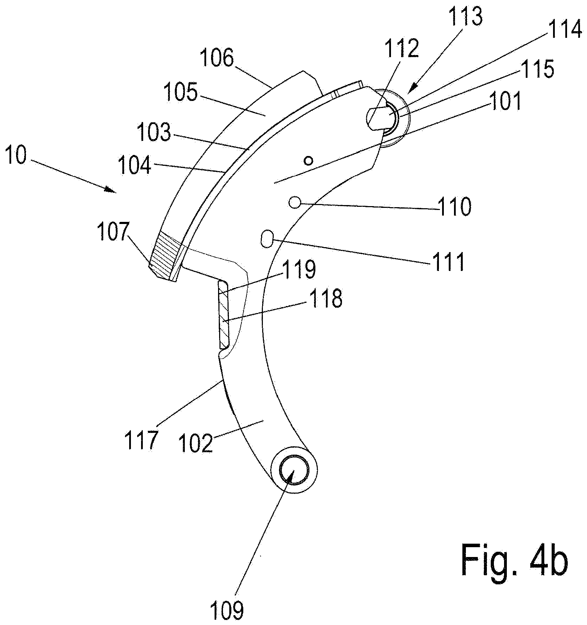

Die in den Figuren 4a und 4b gezeigte Ausführungsvariante einer erfindungsgemäßen Bremsbacke 10 ist mit einer Bremsbelagträgersohle 103 versehen, die eine Stützfläche 104 aufweist, an der ein Bremsbelag 105 mit einer Reibfläche 106, die mit der innenliegenden Reibfläche der Bremstrommel 2 kontaktierbar ist, befestigt ist.

Die Bremsbelagträgersohle 103 ist dabei beispielsweise durch Verschweißen mit einem Steg 101 verbunden, dessen eines Ende 116 über ein Betätigungselement 113 mit der in den Figuren 2 und 3 gezeigten Betätigungseinrichtung 4 in Wirkverbindung, über die Bremskraft auf die Bremsbacke 10 aufbringbar ist.

Das Betätigungselement 113 ist dabei als Rollelement 115 mit einer parallel zur Symmetrieachse der Bremstrommel 2 ausgerichteten Drehachse ausgebildet, wobei die Aufhängung des Rollelements 115 vorzugsweise über einen Stift 114 erfolgt, der in einer Nut 112 in der der Betätigungseinrichtung 4 zugewandten Stirnseite des Steges 101 arretiert ist.

Der Steg 101 ist an seinem anderen Ende durch einen Verlängerungsabschnitt 102 verlängert, der sich von der Bremsbelagträgersohle 103 weg erstreckt und an dessen entferntem Ende eine bevorzugt als Bohrung ausgebildete Anlenkung 109 für einen als Befestigungsstift ausgebildeten Bremsbackenträger 5, 6 ausgebildet ist, über die die Bremsbacke 10 mit der ortsfesten Trägerscheibe 8 schwenkbar verbunden ist.

Auf der der Bremstrommel 2 zugewandten Seite 117 des Verlängerungsabschnittes 102 ist eine Führung zur Betätigung einer benachbarten Bremsbacke 20 vorgesehen die, wie hier gezeigt, bevorzugt als in die der Bremstrommel 2 zugewandten Seite 117 des Verlängerungsabschnittes 102 eingesetztes Führungselement 118 ausgebildet ist. Das Führungselement 118 ist dabei gemäß einer in Figur 4a gezeigten Variante eben und bevorzugt winklig zur der Bremstrommel 2 zugewandten Seite 117 des Verlängerungsabschnittes 102 und der Bremsbelagträgersohle 103 in den Steg eingelassen, wobei ein Ende des Führungselementes 118 in den der Bremsbelagträgersohle 103 nahen Bereich des Steges 101 ragt und das andere Ende in den Verlängerungsabschnitt 102 hineinragt. Die Übergänge zwischen dem freiliegenden Abschnitt des Führungselementes 118 und der der Bremstrommel 2 zugewandten Seite 117 des Verlängerungsabschnittes 102 bzw. dem der Bremsbelagträgersohle 103 nahen Bereich des Steges 101 sind dabei stumpfwinklig ausgeführt, bevorzugt in einem Winkelbereich von etwa 130° bis 160°.

Alternativ kann das Führungselement 118 gemäß einer in Figur 4b gezeigten Variante eben oder der Kontur der der Bremstrommel 2 zugewandten Seite 117 des Verlängerungsabschnittes 102 folgend leicht gewölbt in die der Bremstrommel 2 zugewandten Seite 117 des Verlängerungsabschnittes 102 eingelassen sein.

In einer nochmals alternativen Ausführungsvariante kann die Führung auch als an der der Bremstrommel 2 zugewandten Seite 117 des Verlängerungsabschnittes 102 angeformte Führungsbahn ausgebildet sein.

Mit dieser Führung der Bremsbacke 10 steht, wie in den Figuren 2, 3, 6a und 6b gezeigt ist, ein Betätigungselement 213 der Bremsbacke 20 in Wirkverbindung. Die Bremsbacke 20 ist ebenfalls mit einer an einem Steg 201 befestigten Bremsbelagträgersohle 203 ausgebildet, die eine Stützfläche 204 aufweist, an der mindestens ein kreisbogenförmiger Bremsbelag 205 befestigt ist. An dem der benachbarten Bremsbacke 10 zugewandtem Ende der Bremsbacke 20 ist an dem Steg 201 das Betätigungselement 213 vorgesehen, dass in Wirkverbindung mit der Führung der benachbarten Bremsbacke 10 bringbar ist, so dass eine durch die Betätigungseinrichtung 4 ausgelöste Betätigung der ersten Bremsbacke 10 über das Betätigungselement 213 und die Führung an dem Verlängerungsabschnitt 102 der Bremsbacke 10 eine gleichzeitige Bewegung der Bremsbacke 20 angesteuert wird. Das Betätigungselement 213 ist dabei wie das Betätigungselement 113 der ersten Bremsbacke 10 als Rollelement 215 mit einer parallel zur Symmetrieachse der Bremstrommel 2 ausgerichteten Drehachse ausgebildet, wobei die Aufhängung des Rollelements 215 vorzugsweise über einen Stift 214 erfolgt, der in einer Nut 212 in der der Führung der Bremsbacke 10 zugewandten Stirnseite des Steges 201 arretiert ist.

Auf der dem Betätigungselement 213 abgewandten Ende des Steges 201 ist ein Verlängerungsabschnitt 202 vorgesehen, der sich von der Bremsbelagträgersohle 203 weg erstreckt und an dessen entferntem Ende eine Anlenkung 209 ausgebildet ist, die in gleicher Weise wie die Anlenkung der Bremsbacke 10 ausgebildet ist. An dem Steg 101 ist eine erste Bohrung 110 vorgesehen, die der Halterung eines ersten Rückholelementes 7 dient, mit dem die mit der Betätigungseinrichtung 4 in Wirkverbindung stehende Bremsbacken 10 miteinander koppelbar sind. Da bevorzugt als Zugfeder ausgebildete Rückholelement 7 zieht nach erfolgtem Bremsvorgang, bei dem die beiden Bremsbacken 10 durch die Betätigungseinrichtung 4 aus ihrer Ruhestellung in eine Bremsstellung auseinander bewegt wurden, die beiden Bremsbacken 10 beim Zurückfahren der Betätigungseinrichtung 4 in ihre Ausgangsstellung durch die Zugkraft des Rückholelements 7 wieder in ihre Ausgangsstellung zurück.

Des Weiteren ist an dem Steg 101 eine zweite Bohrung 111 vorgesehen, die der Halterung eines zweiten Rückholelementes 7 dient, mit dem die mit der Betätigungseinrichtung 4 in Wirkverbindung stehende Bremsbacke 10 und die über die Führung dieser Bremsbacke 10 betätigbare benachbarte Bremsbacke 20 miteinander koppelbar sind. Der zweite Haltepunkt dieses Rückholelements 7 ist dabei eine Bohrung 210 im Steg 201 der zweiten Bremsbacke 20. Mit diesem bevorzugt ebenfalls als Zugfeder ausgebildeten Rückholelements 7 wird die zweite Bremsbacke 20 nach einem erfolgten Bremsvorgang durch die Bewegung der mit der Betätigungseinrichtung 4 in Wirkverbindung stehenden Bremsbacke 10 zurück in ihre Ausgangsstellung ebenfalls durch die Zugkraft des Rückholelements 7 in seine Ausgangsstellung zurück bewegt.

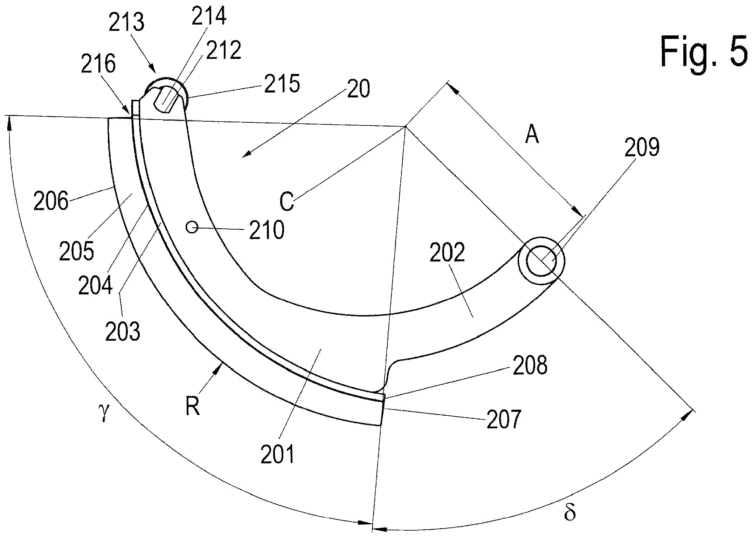

Wie in den Figuren 4a und 5 zu erkennen ist, ist der Radius R der Reibfläche 106, 206 des jeweiligen Bremsbelages 105, 205 der Bremsbacken 10, 20 und der Abstand A zwischen einer Bremstrommelachse C und dem Anlenkpunkt 109, 209 der Bremsbacken 10, 20 am Bremsbackenträger 5, 6 so bemessen, dass das Verhältnis A/R zwischen 0,6 und 0,9 beträgt. Gemäß einer besonderen Ausführungsvariante liegt dieses Verhältnis A/R zwischen 0,6 und 0,7.

Die Größenverhältnisse des Steges 101, 201 mit der daran befestigten Bremsbelagträgersohle 103, 203 und dem Bremsbelag 105, 205 und des Verlängerungsabschnitts 102, 202 der jeweiligen Bremsbacken 10, 20 sind so bemessen, das, von der Bremstrommelachse C aus betrachtet, das Verhältnis eines von dem Bremsbelag 105, 205 überstrichenen Winkels α, γ zu einem Winkel β, δ, der sich von dem dem freien Ende 116, 216 der jeweiligen Bremsbacke 10, 20 abgewandten Ende des Bremsbelags 105, 205 bis zur Anlenkung 109, 209 erstreckt, zwischen 2/3 und 5 liegt. Gemäß einer besonderen Ausführungsvariante beträgt dieses Verhältnis des Winkels α, γ zu dem Winkel β, δ zwischen 2/3 und 5/3.

Die Summe der Winkel α, β der Bremsbacke 10 bzw. der Winkel γ, δ der Bremsbacke 20 beträgt vorzugsweise zwischen 110° und 180°. Gemäß einer besonders bevorzugten Ausführungsvariante beträgt die Summe dieser Winkel zwischen 110° und 130°.

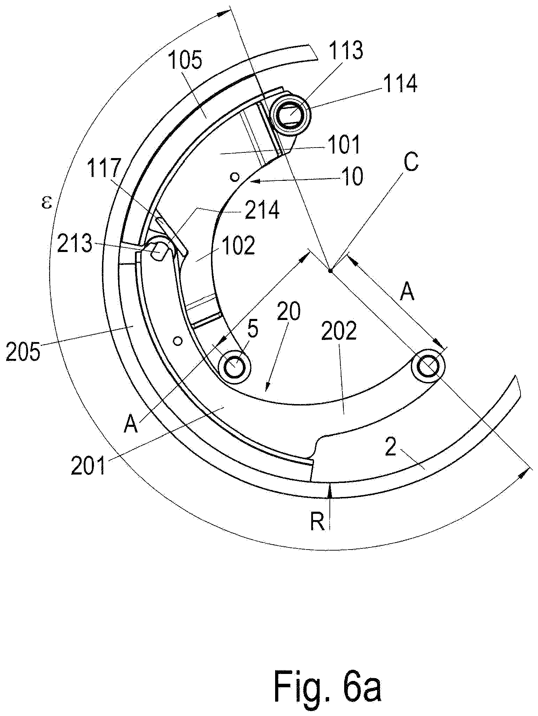

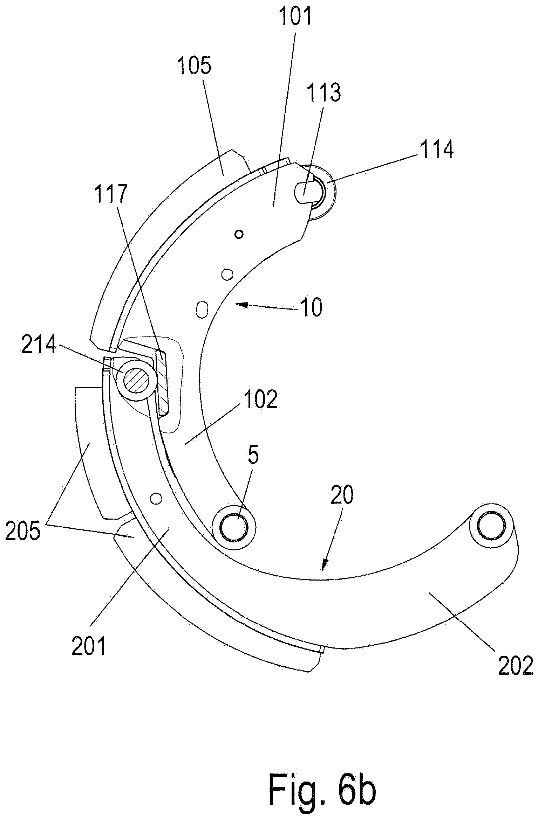

Wie besonders gut in Figur 6a zu erkennen ist, beträgt ein Winkel ε bei dem hier abgebildeten Bremsbackensatz, bestehend aus einer primären Bremsbacke 10, die mit der Betätigungseinrichtung in Wirkverbindung steht und einer sekundären Bremsbacke 20 die über die primäre Bremsbacke 10 auslenkbar ist, zwischen dem freien Ende 116 der primären Bremsbacke 10 und der Anlenkung 5, 6 der mit der primären Bremsbacke 10 in Wirkverbindung stehenden sekundären Bremsbacke 20 mehr als 180°.

Bei der erfindungsgemäßen Trommelbremse, die bevorzugt aus zwei Bremsbackensätzen mit je einer primären Bremsbacke 10 und einer sekundären Bremsbacke 20 besteht sind, wie in den Figuren 2 und 3 gut zu erkennen, sämtliche Bremsbacken mit der ein im Betätigungseinrichtung 4 betätigbar. Denkbar ist auch, dass nur an einer der primären Bremsbacken 10 eine sekundäre Bremsbacke 20 angekoppelt ist.

Die Verlängerungsabschnitte 102, 202 der beiden sekundären Bremsbacken 20 sind über Kreuz angeordnet. An jedem der Bremsbackenträger 5, 6 ist bevorzugt je eine primäre Bremsbacke 10 und eine sekundäre Bremsbacke 20 über die jeweilige Anlenkung 109, 209 gelagert.

Die Betätigungseinrichtung 4 ist bevorzugt als Nocke oder Nockenwelle ausgebildet. Denkbar sind aber auch jegliche andere Ausbildungen der

Betätigungseinrichtung 4 als Bremskeil oder Arbeitszylinder. Auch Ausführungen als elektrische oder elektromechanische Vorrichtungen, beispielsweise mit einem Getriebeelement als Betätigungseinrichtung 4 sind denkbar.

Die Erfindung ist nicht auf die hier beschriebenen Ausführungsbeispiele beschränkt. Wichtig ist das die Anordnung und Anlenkung der Bremsbacken in der erfindungsgemäßen Trommelbremse eine synchrone Bewegung erlauben und eine große Reibfläche bereit stellen, die aufgrund der gleichmäßigen Druckverteilung eine lange Lebensdauer der Trommelbremse gewährleisten.

### Bezugszeichenliste:

- 1: Trommelbremse
- 2: Bremstrommel
- 3: Träger
- 4: Betätigungseinrichtung
- 5: Bremsbackenträger
- 6: Bremsbackenträger
- 7: Rückholelement
- 8: Trägerscheibe
- 10: Bremsbacke(n)
- 20: Bremsbacke(n)
- 101: Steg
- 102: Verlängerungsabschnitt
- 103: Bremsbelagträgersohle
- 104: Stützfläche
- 105: Bremsbelag
- 106: Reibfläche
- 109: Anlenkung/Anlenkpunkt
- 111: Bohrung
- 112: Nut
- 113: Betätigungselement
- 114: Stift
- 115: Rollelement
- 116: Ende
- 117: Seite
- 118: Führungselement
- 201: Steg
- 202: Verlängerungsabschnitt
- 203: Bremsbelagträgersohle
- 204: Stützfläche
- 205: Bremsbelag
- 206: Reibfläche
- 209: Anlenkung/Anlenkpunkt
- 210: Bohrung
- 213: Betätigungselement
- 214: Stift
- 215: Rollelement
- 216: Ende
- A: Abstand
- C: Bremstrommelachse
- R: Radius
- α: Winkel
- β: Winkel
- γ: Winkel
- δ: Winkel
- ε: Winkel

## Patentansprüche

1. Bremsbacke (10) einer Trommelbremse (1) mit mehr als zwei in einer Bremstrommel (2) angeordneten Bremsbacken (10, 20), mit einer an einem Steg (101) befestigten Bremsbelagträgersohle (103), die eine Stützfläche (104) aufweist, an der mindestens ein kreisbogenförmiger Bremsbelag (105) befestigt ist, wobei die mit einem Rückholelement (7) versehene Bremsbacke (10) eine Anlenkung (109) aufweist, die an einem Bremsbackenträger (5, 6) schwenkbar lagerbar ist und an ihrem der Anlenkung (109) gegenüberliegenden freien Ende (115) über ein Betätigungselement (113) mit einer Betätigungseinrichtung (4) der Trommelbremse (1) in Wirkverbindung steht, der Steg (101) einen Verlängerungsabschnitt (102) aufweist, der sich von der Bremsbelagträgersohle (103) weg erstreckt und an dessen entferntem Ende die Anlenkung (109) ausgebildet ist und wobei an der der Bremstrommel (2) zugewandten Seite (117) des Verlängerungsabschnittes (102) eine Führung zur Betätigung einer benachbarten Bremsbacke (20) vorgesehen ist, **dadurch gekennzeichnet, dass** das Betätigungselement (113) als an der der Betätigungseinrichtung (4) zugewandten Stirnseite des Steges (101) aufgehängtes Rollelement (115) mit einer parallel zur Symmetrieachse der Bremstrommel (2) ausgerichteten Drehachse ausgebildet ist.

2. Bremsbacke (10) nach Anspruch 1, **dadurch gekennzeichnet, dass** die Führung als an der der Bremstrommel (2) zugewandten Seite (117) des Verlängerungsabschnittes (102) angeformte Führungsbahn ausgebildet ist.

3. Bremsbacke (10) nach Anspruch 1, **dadurch gekennzeichnet, dass** die Führung als in die der Bremstrommel (2) zugewandte Seite (117) des Verlängerungsabschnittes (102) eingesetztes Führungselement (118) ausgebildet ist.

4. Bremsbacke (10) nach einem der vorstehenden Ansprüche, **dadurch gekennzeichnet, dass** an dem Steg (101) eine Bohrung (110) zur Halterung eines ersten Rückholelements (7) vorgesehen ist, mit dem die mit der Betätigungseinrichtung (4) in Wirkverbindung stehenden Bremsbacken (10) miteinander koppelbar sind und eine zweite Bohrung (111) zur Halterung eines zweiten Rückholelements (7) vorgesehen ist, mit dem die mit der Betätigungseinrichtung (4) in Wirkverbindung stehende Bremsbacke (10) und die über die Führung betätigbare benachbarte Bremsbacke (20) miteinander koppelbar sind.

5. Bremsbacke (20) einer Trommelbremse (1) mit mehr als zwei in einer Bremstrommel (2) angeordneten Bremsbacken (10, 20), mit einer an einem Steg (201) befestigten Bremsbelagträgersohle (203), die eine Stützfläche (204) aufweist, an der mindestens ein kreisbogenförmiger Bremsbelag (205) befestigt ist, wobei die mit einem Rückholelement (7) versehene Bremsbacke (20) eine Anlenkung (209) aufweist, die an einem Bremsbackenträger (5, 6) schwenkbar lagerbar ist, wobei an dem der Anlenkung (209) gegenüberliegenden freien Ende (215) des Steges (201) ein Betätigungselement (213) vorgesehen ist, das in Wirkverbindung mit einer Führung einer benachbarten Bremsbacke (10) bringbar ist und wobei der Steg (201) einen Verlängerungsabschnitt (202) aufweist, der sich von der Bremsbelagträgersohle (203) weg erstreckt und an dessen entferntem Ende die Anlenkung (209) ausgebildet ist, **dadurch gekennzeichnet, dass** das Betätigungselement (213) als an der der benachbarten Bremsbacke (10) zugewandtem Stirnseite des Steges (201) aufgehängtes Rollelement (115) mit einer parallel zur Symmetrieachse der Bremstrommel (2) ausgerichteten Drehachse ausgebildet ist.

6. Bremsbacke (10, 20) nach einem oder mehreren der vorstehenden Ansprüche, **dadurch gekennzeichnet, dass** das das Verhältnis A/R zwischen 0,6 und 0,9, beträgt, wobei R der Radius der Reibfläche (106, 206) des Bremsbelages (105, 205) ist und A der Abstand zwischen der Bremstrommelachse (C) und der Anlenkung (109, 209) der Bremsbacke (10, 20) am Bremsbackenträger (5, 6).

7. Bremsbacke (10, 20) nach einem oder mehreren der vorstehenden Ansprüche, **dadurch gekennzeichnet, dass**, von einer Bremstrommelachse (C) aus betrachtet, das Verhältnis eines von dem Bremsbelag (105, 205) überstrichenen Winkels (α, γ) zu einem Winkel (β, ö), der sich von dem dem freien Ende (116, 216) der Bremsbacke (10, 20) abgewandten Ende des Bremsbelags (105, 205) bis zur Anlenkung (109, 209) erstreckt, zwischen 2/3 und 5 liegt.

8. Bremsbacke (10, 20) nach Anspruch 7, **dadurch gekennzeichnet, dass** Verhältnis des Winkels (α, γ) zu dem Winkel (β, δ) zwischen 2/3 und 5/3 liegt.

9. Bremsbacke (10, 20) nach Anspruch 7 oder 8, **dadurch gekennzeichnet, dass** die Summe aus dem Winkel (α, γ) und dem Winkel (β, δ) 110° bis 180° beträgt.

10. Bremsbacke (10, 20) nach einem oder mehreren der vorstehenden Ansprüche, **dadurch gekennzeichnet, dass** die Anlenkung (109, 209) als Bohrung für einen als Befestigungsstift ausgebildeten Bremsbackenträger (5, 6) ausgebildet ist.

11. Bremsbacke (10, 20) nach einem oder mehreren der vorstehenden Ansprüche, **dadurch gekennzeichnet, dass** das Rückholelement (7) als Zugfeder ausgebildet ist.

12. Bremsbackensatz einer Trommelbremse (1) mit mindestens vier paarweise in einer Bremstrommel (2) angeordneten Bremsbacken (10, 20), **dadurch gekennzeichnet, dass** jeweils eine primäre Bremsbacke (10) der paarweise zueinander angeordneten Bremsbacken (10, 20) gemäß Anspruch 1 ausgebildet ist und die andere, sekundäre Bremsbacke (20) der paarweise zueinander angeordneten Bremsbacken (10, 20) gemäß Anspruch 5 ausgebildet ist, wobei im montierten Zustand die Führung an dem Verlängerungsabschnitt (102) der primären Bremsbacke (10) zur Betätigung der sekundären Bremsbacke (20) mit dem Betätigungselement (213) der sekundären Bremsbacke (20) in Wirkverbindung steht.

13. Bremsbackensatz nach Anspruch 12, **dadurch gekennzeichnet, dass** ein Winkel (ε) zwischen dem freien Ende (116) der primären Bremsbacke (10) und der Anlenkung (5, 6) der mit der primären Bremsbacke (10) in Wirkverbindung stehenden sekundären Bremsbacke (20) mehr als 180° beträgt.

14. Trommelbremse mit einer mehr als zwei innenliegende Bremsbacken (10, 20), aufweisenden zylinderförmigen Bremstrommel (2) und einer gegenüber der Bremstrommel (2) verdrehsicher halterbaren Trägerscheibe (8), an der mehrere Bremsbackenträger (5, 6) befestigt sind zur verschwenkbaren Aufnahme der Bremsbacken (10, 20), die jeweils eine Bremsbelagträgersohle (103, 203) mit einer Stützfläche (104, 204) aufweisen, an der jeweils mindestens ein kreisausschnittsförmiger Bremsbelag (105, 205) befestigt ist, wobei zwei der Bremsbacken (10) an dem dem Bremsbackenträger (5, 6) gegenüberliegenden Ende mit einer Betätigungseinrichtung (4) in Wirkverbindung stehen, **dadurch gekennzeichnet, dass** die Bremsbacken (10, 20) gemäß einem oder mehreren der vorstehenden Ansprüche ausgebildet sind.

15. Trommelbremse nach Anspruch 14, **dadurch gekennzeichnet, dass** die Bremsbacken (10, 20) mit der einen Betätigungseinrichtung (4) betätigbar sind, wobei mindestens eine der Bremsbacken (20) mit einer der mit der Betätigungseinrichtung (4) in Wirkverbindung stehenden Bremsbacken (10) gekoppelt ist.

16. Trommelbremse nach Anspruch 14 oder 15, **dadurch gekennzeichnet, dass** mit jeder der mit der Betätigungseinrichtung (4) in Wirkverbindung stehenden Bremsbacken (10) eine Bremsbacke (20) gekoppelt ist.

17. Trommelbremse nach einem der vorstehenden Ansprüche 14 bis 16, **dadurch gekennzeichnet, dass** die Verlängerungsabschnitte (102, 202) der sekundären Bremsbacken (20) über Kreuz angeordnet sind und an jedem der Bremsbackenträger (5, 6) je eine primäre Bremsbacke (10) und eine sekundäre Bremsbacke (20) gelagert ist.

## Claims

1. A brake shoe (10) of a drum brake (1) having more than two brake shoes (10, 20) arranged in a brake drum (2), having a brake lining holder plate (103) which is fastened to a web (101) and comprises a support surface (104), to which at least one circular arc-shaped brake lining (105) is fastened, wherein the brake shoe (10) is provided with a return element (7) and comprises a pivotal linkage (109), which can be pivotally supported on a brake shoe holder (5, 6) and at its free end (115) situated opposite the pivotal linkage (109) is operatively connected via an actuating element (113) to an actuating device (4) of the drum brake (1), wherein the web (101) comprises an extension segment (102) that extends away from the brake lining holder plate (103) and at the farther end of which the pivotal linkage (109) is formed, and wherein a guide to actuate an adjacent brake shoe (20) is provided on the side (117) of the extension segment (102), **characterised in that** the actuating element (113) is embodied as a rolling element (115) suspended on the end face of the web (101) facing the actuating device (4) with an axis of rotation aligned parallel to the axis of symmetry of the brake drum (2).

2. The brake shoe (10) as claimed in claim 1, **characterised in that** the guide is embodied as a guideway formed on the side (117) of the extension segment (102) facing the brake drum (2).

3. The brake shoe (10) as claimed in claim 1, **characterised in that** the guide is embodied as a guide element (118) inserted into the side (117) of the extension segment (102) facing the brake drum (2).

4. The brake shoe (10) as claimed in one of the preceding claims, **characterised in that** provided on the web (101) is a bore (110) for the mounting of a first return element (7), by which the brake shoes (10) operatively connected to the actuating device (4) can be coupled together, and a second bore (111) for the mounting of a second return element (7), by which the brake shoes (10) operatively connected to the actuating device (4) and the adjacent brake shoe (20), that can be actuated via the guide, can be coupled together.

5. A brake shoe (20) of a drum brake (1) having more than two brake shoes (10, 20) arranged in a brake drum (2), having a brake lining holder plate (203), which is fastened to a web (201) and which comprises a support surface (204), to which at least one circular arc-shaped brake lining (205) is fastened, wherein the brake shoe (20) provided with a return element (7) comprises a pivotal linkage (209), which can be pivotally supported on a brake shoe holder (5, 6), wherein provided at the free end (215) of the web (201) opposite the pivotal linkage (209) is an actuating element (213) that can be operatively connected to a guide of an adjacent brake shoe (10) and wherein the web (201) comprises an extension segment (202) that extends away from the brake lining holder plate (203) and at the farther end of which the pivotal linkage (109) is formed, **characterised in that** the actuating element (213) is embodied as a rolling element (115) suspended on the end face of the web (201) facing the adjacent brake shoe (10) with an axis of rotation aligned parallel to the axis of symmetry of the brake drum (2).

6. The brake shoe (10, 20) as claimed in one or more of the preceding claims, **characterised in that** the A/R ratio is between 0.6 and 0.9, where R is the radius of the friction surface (106, 206) of the brake lining (105, 205) and A is the distance between the brake drum axis (C) and the pivotal linkage (109, 209) of the brake shoe (10, 20) on the brake shoe holder (5, 6).

7. The brake shoe (10, 20) as claimed in one or more of the preceding claims, **characterised in that,** viewed from a brake drum axis (C), the ratio of an angle (α, γ) covered by the brake lining (105, 205) to an angle (β, δ), which extends from the end of the brake lining (105, 205) facing away from the free end (116, 216) of the brake shoe (10, 20) to the pivotal linkage (109, 209), is between 2/3 and 5.

8. The brake shoe (10, 20) as claimed in claim 7, **characterised in that** the ratio of the angle (α, γ) to the angle (β, δ) is between 2/3 and 5/3.

9. The brake shoe (10, 20) as claimed in claim 7 or 8, **characterised in that** the sum of the angle (α, γ) and the angle (β, δ) is 110° to 180°.

10. The brake shoe (10, 20) as claimed in one or more of the preceding claims, **characterised in that** the pivotal linkage (109, 209) is embodied as a bore for a brake shoe holder (5, 6) embodied as a fastening pin.

11. The brake shoe (10, 20) as claimed in one or more of the preceding claims, **characterised in that** the return element (7) is embodied as a tension spring.

12. A brake shoe set of a drum brake (1) having at least four brake shoes (10, 20) arranged in pairs in a brake drum (2), **characterised in that** a primary brake shoe (10) of each pair of brake shoes (10, 20) is embodied according to claim 1 and the other, secondary brake shoe (20) of each pair of brake shoes (10, 20) is embodied according to claim 5, wherein in the fitted state the guide on the extension segment (102) of the primary brake shoe (10) is operatively connected to the actuating element (213) of the secondary brake shoe (20) to actuate the secondary brake shoe (20).

13. The brake shoe set as claimed in claim 13, **characterised in that** an angle (ε) between the free end (116) of the primary brake shoe (10) and the pivotal linkage (5, 6) of the secondary brake shoe (20) operatively connected to the primary brake shoe (10) is more than 180°.

14. A drum brake having a cylindrical brake drum (2), comprising more than two enclosed brake shoes (10, 20), and a holder disk (8), which can be mounted non-rotationally in relation to the brake drum (2) and to which a plurality of brake shoe holders (5, 6) are fastened for pivotally receiving the brake shoes (10, 20), each of which comprises a brake lining holder plate (103, 203) having a support surface (104, 204), to each of which at least one sector-shaped brake lining (105, 205) is fastened, wherein two of the brake shoes (10) at the end opposite the brake shoe holder (5, 6) are operatively connected to an actuating device (4), **characterised in that** the brake shoes (10, 20) are embodied according to one or more of the preceding claims.

15. The drum brake as claimed in claim 14, **characterised in that** the brake shoes (10, 20) can be actuated by the one actuating device (4), wherein at least one of the brake shoes (20) is coupled to one of the brake shoes (10) that are operatively connected to the actuating device (4).

16. The drum brake as claimed in claim 14 or 15, **characterised in that** a brake shoe (20) is coupled to each of the brake shoes (10) that are operatively connected to the actuating device (4).

17. The drum brake as claimed in one of the preceding claims 14 to 16, **characterised in that** the extension segments (102, 202) of the secondary brake shoes (20) are arranged crosswise and a primary brake shoe (10) and a secondary brake shoe (20) are each supported on each of the brake shoe holders (5, 6).

## Revendications

1. Mâchoire (10) d'un frein (1) à tambour ayant plus de deux mâchoires (10, 20) de frein montées dans un tambour (2) de frein, une semelle (103) de porte-garniture de frein, qui est fixée à une entretoise (101) et qui a une surface (104) d'appui à laquelle est fixée au moins une garniture (105) de frein en forme d'arc de cercle, la mâchoire (10) de frein,pourvue d'un élément (7) de rappel, ayant une articulation (109), qui peut être montée pivotante sur un porte-mâchoire (5, 6) de frein et qui, à son extrémité (115) libre opposée à l'articulation (109), est en liaison d'action,par l'intermédiaire d'un élément (113) d'actionnement, avec un dispositif (4) d'actionnement du frein (1) à tambour, l'entretoise (101) ayant un tronçon (102) de prolongement, qui s'étend en s'éloignant de la semelle (103) de porte-garniture de frein et à l'extrémité éloignée duquel est constituée l'articulation (109), et dans laquelle il est prévu, du côté (117), tourné vers le tambour (2) de frein, du tronçon (102) de prolongement, un guidage pour actionner une mâchoire (20) de frein voisine, **caractérisée en ce que** l'élément (113) d'actionnement est constitué sous la forme d'un élément (115) de roulement suspendu du côté frontal, tourné vers le dispositif (4) d'actionnement, de l'entretoise (101) et ayant un axe de rotation dirigé parallèlement à l'axe de symétrie du tambour (2) de frein.

2. Mâchoire (10) de frein suivant la revendication 1, **caractérisée en ce que** le guidage est constitué sous la forme d'une piste de guidage formée du côté (117), tourné vers le tambour (2) de frein, du tronçon (102) de prolongement.

3. Mâchoire (10) de frein suivant la revendication 1, **caractérisée en ce que** le guidage est constitué sous la forme d'un élément (118) de guidage inséré dans le côté (117), tourné vers le tambour (2) de frein, du tronçon (102) de prolongement.

4. Mâchoire (10) de frein suivant l'une des revendications précédentes, **caractérisée en ce que**, sur l'entretoise (101), est prévu un trou (110) pour maintenir un premier élément (7) de rappel, par lequel les mâchoires (10) de frein, en liaison d'action avec le dispositif (4) d'actionnement, peuvent être couplées les unes aux autres et il est prévu un deuxième trou (111) pour maintenir un deuxième élément (7) de rappel, par lequel la mâchoire (10), en liaison d'action avec le dispositif (4) d'actionnement, et la mâchoire (20) de frein voisine pouvant être actionnée par l'intermédiaire du guidage peuvent être couplées l'une à l'autre.

5. Mâchoire (20) d'un frein (1) à tambour ayant plus de deux mâchoires (10, 20) de frein montées dans un tambour (2) de frein, une semelle (203) de porte-garniture de frein, qui est fixée à une entretoise et qui a une surface (204) d'appui à laquelle est fixée au moins une garniture (205) de frein en forme d'arc de cercle, la garniture (20) de frein, pourvue d'un élément (7) de rappel, ayant une articulation (209), qui peut être montée pivotante sur un porte-mâchoire (5, 6) de frein, dans laquelle il est prévu, à l'extrémité (215) libre, opposée à l'articulation (209), de l'entretoise (201), un élément (213) d'actionnement, qui peut être mis en liaison d'action avec un guidage d'une mâchoire (10) de frein voisine et dans laquelle l'entretoise (201) a un tronçon (202) de prolongement, qui s'étend en s'éloignant de la semelle (203) de porte-garniture de frein et à l'extrémité éloignée duquel l'articulation (209) est constituée, **caractérisée en ce que** l'élément (213) d'actionnement est constitué sous la forme d'un élément (115) de roulement suspendu au côté frontal, tourné vers la mâchoire (10) de frein voisine, de l'entretoise (201) et ayant un axe de rotation dirigé parallèlement à l'axe de symétrie du tambour (2) de frein.

6. Mâchoire (10, 20) suivant l'une ou plusieurs des revendications précédentes, **caractérisée en ce que** le rapport A/R est compris entre 0,6 et 0,9, R étant le rayon de la surface (106, 206) de frottement de la garniture (105, 205) de frein et A étant la distance entre l'axe (C) du tambour de frein et l'articulation (109, 209) de la mâchoire (10, 20) de frein sur le porte-mâchoire (5, 6) de frein.

7. Mâchoire (10, 20) de frein suivant l'une ou plusieurs des revendications précédentes, **caractérisée en ce que**, considéré à partir d'un axe (C) du tambour de frein, le rapport d'un angle (α, γ), balayé par la garniture (105, 205) de frein, a un angle (β, δ), qui s'étend de l'extrémité, éloignée de leur extrémité (116, 216) libre de la mâchoire (10, 20) de frein, de la garniture (105, 205) de frein, à l'articulation (109, 209) est compris entre 2/3 et 5.

8. Mâchoire (10, 20) suivant la revendication 7, **caractérisée en ce que** le rapport de l'angle (α, γ) à l'angle (β, δ) est compris entre 2/3 et 5/3.

9. Mâchoire (10, 20) suivant la revendication 7 ou 8, **caractérisée en ce que** la somme de l'angle (α, γ) et de l'angle (β, δ) va de 110° à 180°.

10. Mâchoire (10, 20) suivant l'une ou plusieurs des revendications précédentes, **caractérisée en ce que** l'articulation (109, 209) est constituée sous la forme d'un trou pour un porte-mâchoire (5, 6) de frein constitué sous la forme d'une broche de fixation.

11. Mâchoire (10, 20) suivant l'une ou plusieurs des revendications précédentes, **caractérisée en ce que** l'élément (7) de rappel est constitué sous la forme d'un ressort de traction.

12. Jeu de mâchoires de frein (1) à tambour, comprenant au moins quatre mâchoires (10, 20) de frein montées par paire dans un tambour (2) de frein, **caractérisé en ce qu'**une mâchoire (10) de frein primaire, des mâchoires (10, 20) de frein montées par paire l'une avec l'autre, est constituée suivant la revendication 1, et l'autre mâchoire (20) de frein secondaire, des mâchoires (10, 20) de frein montées par paire l'une avec l'autre, est constituée suivant la revendication 5, dans lequel, à l'état monté, le guidage sur le tronçon (102) de prolongement de la mâchoire (10) de frein primaire est en liaison d'action pour l'actionnement de la mâchoire (20) de frein secondaire par l'élément (213) d'actionnement de la mâchoire (20) de frein secondaire.

13. Jeu de mâchoires de frein suivant la revendication 12, **caractérisé en ce qu'**un angle (ε), entre l'extrémité (116) libre de la mâchoire (10) de frein primaire et l'articulation (5, 6) de la mâchoire (20) de frein secondaire en liaison d'action avec la mâchoire (10) de frein primaire, est supérieur à 180°.

14. Frein à tambour ayant un tambour (2) de frein de forme cylindrique, comportant plus de deux mâchoires (10, 20) de frein se trouvant à l'intérieur et un disque (8) support, qui peut être maintenu sans torsion par rapport au tambour (2) de frein et sur lequel sont fixées plusieurs porte-mâchoires (5, 6) de frein pour la réception, avec possibilité de pivotement, des mâchoires (10, 20) de frein, qui ont chacune une semelle (103, 203) de porte-garniture de frein ayant une surface (104, 204) d'appui, sur laquelle est fixée respectivement au moins une garniture (105, 205) de frein en forme d'arc de cercle, dans lequel deux des mâchoires (10) de frein, à l'extrémité opposée au porte-garniture (5, 6) de frein, sont en liaison d'action avec un dispositif (4) d'actionnement, **caractérisé en ce que** les mâchoires (10, 20) de frein sont constituées suivant l'une ou plusieurs des revendications précédentes.

15. Frein à tambour suivant la revendication 14, **caractérisé en ce que** les mâchoires (10, 20) de frein peuvent être actionnées par le un dispositif (4) d'actionnement, au moins l'une des mâchoires (20) de frein étant couplée à l'une des mâchoires (10) de frein en liaison d'action avec le dispositif (4) d'actionnement.

16. Frein à tambour suivant la revendication 14 ou 15, **caractérisé en ce qu'**une mâchoire (20) de frein est couplée à chacune des mâchoires (10) de frein en liaison d'action avec le dispositif (4) d'actionnement.

17. Frein à tambour suivant l'une des revendications précédentes 14 à 16, **caractérisé en ce que** les tronçons (102, 202) de prolongement des mâchoires (20) de frein secondaire sont disposés en croix et, sur chaque porte-mâchoire (5, 6) de frein est montée respectivement une mâchoire (10) de frein primaire et une mâchoire (20) de frein secondaire.
